# EUROPÄISCHE PATENTSCHRIFT

(11) **EP 3 481 648 B1**
(45) Veröffentlichungstag und Bekanntmachung des Hinweises auf die Patenterteilung: **08.07.2020**
(21) Anmeldenummer: 17720490.6
(22) Anmeldetag: 02.05.2017
(51) Int. Cl.: B60C 11/16, B60C 11/03

(54) **FAHRZEUGREIFEN**
VEHICLE TIRE
PNEUMATIQUE DE VÉHICULE

(30) Priorität: 06.07.2016 DE 102016212279
(43) Veröffentlichungstag der Anmeldung: 15.05.2019
(73) Patentinhaber: Continental Reifen Deutschland GmbH, 30165 Hannover (DE)
(72) Erfinder: SCHLITTENHARD, Jan, 30900 Wedemark (DE); BERGER, Christoph, 30173 Hannover (DE)
(74) Vertreter: Finger, Karsten
(86) Internationale Anmeldenummer: PCT/EP2017/060321
(87) Internationale Veröffentlichungsnummer: WO 2018/007040

(56) Entgegenhaltungen:
- WO-A1-2005/049341
- WO-A1-2016/080292
- JP-A- 2013 023 110

## Beschreibung

Die Erfindung betrifft einen drehrichtungsgebundenen Fahrzeugreifen mit Laufstreifenprofil und Spikes, welche aus einem Spikekörper und einem Spikepin bestehen, wobei der Spikepin mit einer umlaufenden Griffkante, welche eine in Drehrichtung bei Vorwärtsfahrt vorgeordnete und eine in Drehrichtung nachgeordneten Griffkante bildet, welche sich jeweils über die gesamte in axialer Richtung A des Reifens ausgebildete Breite des Spikepins erstrecken, wobei die in Umfangsrichtung U des Reifens wirksame Griffkantenlänge der umlaufenden Griffkante größer ist als die in axialer Richtung A wirksame Griffkantenlänge, wobei die in Drehrichtung bei Vorwärtsfahrt vorgeordnete Griffkante in Drehrichtung mit zwei spitz aufeinander zulaufenden Griffkantenabschnitten ausgebildet ist, wobei der Spikekörper aus einem Fuß flansch, einem Mittenabschnitt und einem Oberflansch ausgebildet ist, wobei der Oberflansch und der Mittenabschnitt in den senkrecht zur Längserstreckungsrichtung des Spikes ausgebildeten Schnittebenen jeweils mit runder, ovaler oder elliptischer Schnittkontur ausgebildet sind.

Es ist bekannt, Spikereifen mit Spikes auszubilden, wobei die Spikes mit einer Geometrie ihres Spikepins ausgebildet sind, deren Erstreckungslänge in axialer Richtung des Reifens größer ist als die in Umfangsrichtung, um auf diese Weise gute Eisgriffeigenschaften für Traktion und Bremsen zu ermöglichen. Üblicherweise ist die Gestaltung der Spikes und der Spikepins dabei zur Traktions- und Bremsrichtung symmetrisch ausgebildet.

Versuche haben jedoch ergeben, dass sich die Spikebewegungen eines Traktionsmanövers von den Spikebewegungen eines Bremsmanövers unterscheiden. Daher ist es wünschenswert, die unterschiedlichen Bewegungsabläufe der unterschiedlichen Belastungen auch bei der Auslegung des Spike-Design besser zu berücksichtigen und die die Spike-Performance zu verbessern.

Aus der EP 2 540 527 A1 sind Fahrzeugreifen mit rotationsunsymmetrischen Spikes bekannt, bei welchen im Spikepin in Traktionsrichtung vorgeordnet die Griffkante mit spitz zulaufenden Abschnitten und in Bremsrichtung vorgeordnet die Griffkante mit konkaven Abschnitt ausgebildet ist. Auf diese Weise ist die Griffwirkung in Traktions- und Bremsrichtung durch die Griffkantenunterschiede unterschiedlich. Der aus EP 2 540 527 A1 eingesetzte Spike ist dabei längs seiner Erstreckung in allen Abschnitten, d.h. sowohl im Fußflansch, als auch im Mittenteil des Spikekörpers sowie im Oberflansch und in der Spitze des Spikepins mit kompliziertem, unterschiedlichem Dreiecksdesign ausgebildet, wobei die Einzelabschnitte dabei gegeneinander jeweils so versetzt angeordnet sind, dass ihre jeweiligen Schwerpunkte ebenfalls alle versetzt zueinander positioniert sind. Der Abstand zwischen Gesamtschwerpunktsachse des Gesamtspikes zu der in Drehrichtung bei Vorwärtsfahrt vorderen Kante des Spikefußes ist dabei deutlich größer ausgebildet als der Abstand der hinteren Erstreckungskante des Spikefußes zur Gesamtschwerpunktsachse. Die komplizierte dreidimensionale Struktur soll dabei den Halt des Spikes bei Brems- und Traktionsmanöver sichern. Das komplizierte Dreiecksdesign in allen Teilen des Spikes wie Fußflansch, Mittenteil, Oberflansch und Spikespitze ist in der Herstellung sehr aufwendig. Darüber hinaus ist die komplizierte Körperform nach der Montage des Spikes in die umliegende Gummimatrix des Reifens sehr ungleichmäßig, wodurch Spannungsspitzen in dieser induziert werden. Diese kann zur Reduktion von Haltekräften durch stärkere Kriechprozesse im Gummi und zur Induzierung von Rissen im Gummi und langfristig zum Verlust des Spikes führen können. Die Haltbarkeit der Spikes im Profil sowie ihre Funktionssicherheit werden hierdurch beeinträchtigt. Die ungleichmäßige Verspannung der Gummimatrix ist auch nachteilig, wenn der Spike in besonderen Fällen mittels Haftvermittlers in der Gummimatrix anvulkanisiert werden soll.

**Aus der** JP 2013 23110 A **ist ein Fahrzeugreifen gemäß den Merkmalen des Oberbegriffs des Anspruchs 1 bekannt.**

Der Erfindung liegt daher die Aufgabe zugrunde, derartige Fahrzeugreifen mit Spikes zu ermöglichen, bei denen unterschiedliche Bedingungen an Bremsen und Traktionen bei einfacher Verarbeitbarkeit sicherer und einfacher ermöglicht werden.

Die Aufgabe wird erfindungsgemäß durch die Ausbildung eines drehrichtungsgebundenen Fahrzeugreifens mit Laufstreifenprofil und Spikes, welche aus einem Spikekörper und einem Spikepin bestehen, wobei der Spikepin mit einer umlaufenden Griffkante, welche eine in Drehrichtung bei Vorwärtsfahrt vorgeordnete und eine in Drehrichtung nachgeordnete Griffkante bildet, welche sich jeweils über die gesamte in axialer Richtung A des Reifens ausgebildete Breite des Spikepins erstrecken, wobei die in Umfangsrichtung U des Reifens wirksame Griffkantenlänge der umlaufenden Griffkante größer ist als die in axialer Richtung A wirksame Griffkantenlänge, wobei die in Drehrichtung bei Vorwärtsfahrt vorgeordnete Griffkante in Drehrichtung mit zwei spitz aufeinander zulaufenden Griffkantenabschitten ausgebildet ist, wobei der Spikekörper aus einem Fußflansch, einem Mittenabschnitt und einem Oberflansch ausgebildet ist, wobei der Oberflansch und der Mittenabschnitt in den senkrecht zur Längserstreckungsrichtung des Spikes ausgebildeten Schnittebenen jeweils mit runder, ovaler oder elliptischer Schnittkontur ausgebildet ist, gemäß den Merkmalen von Anspruch 1 gelöst, bei dem der Schwerpunkt des Spikepins, der Schwerpunkt des Oberflansches, der Schwerpunkt des Mittenabschnittes und der Schwerpunkt des Fußflansches auf einer gemeinsamen Geraden angeordnet sind, und bei dem in den senkrecht zur Längserstreckungsrichtung des Spikes ausgebildeten Schnittebenen der Fußflansch mit einer Schnittkontur ausgebildet ist, bei der der in Drehrichtung am weitesten von der gemeinsamen Geraden entfernte, der Geraden vorgeordnete Punkt der Schnittkontur mit einem in Drehrichtung gemessenen Abstand a zur Geraden angeordnet ist und bei der der in Drehrichtung am weitesten von der gemeinsamen Geraden entfernte, der Geraden nachgeordnete Punkt der Schnittkontur mit einem in Drehrichtung gemessenen Abstand b zur Geraden angeordnet ist mit a ≠ b.

Durch diese Ausbildung wird ermöglicht, dass in den gerade für Traktion und Bremsen besonders relevanten Teilen des Spikes auch die für Traktion und Bremsen wichtigen Unterschiede bei gemeinsamer Schwerpunktsachse der verschiedenen Spikeabschnitte berücksichtigt werden. So wird die Griffkante des Spikepins in Traktions- und Bremsrichtung bei Vorwärtsfahrt jeweils für das Bremsen und die Traktion unterschiedlichen Anforderungen optimiert gestaltet, so dass die für Traktion wichtige vordere Kante leicht in Eis eindringen und dieses zerspanen kann. Der Spikekörper ermöglicht mit seinem Fuß flansch durch die Ausbildung mit unterschiedlich großem Abstand b und a, dass die Bettungssteifigkeit des Spikes für Traktion und Bremsen unterschiedlich ist. Da die Bedingungen für Traktion und Bremsen unterschiedlich sind kann durch die unterschiedliche Bettungssteifigkeit sowohl Traktion als auch Bremsen entsprechend den individuellen Erfordernissen des gewünschten Einsatzes des Reifens optimiert eingestellt werden. Dabei ermöglicht die Wahl des Längenverhältnisses der Längen a und b die gezielte Ausbildung einer größeren Bettungssteifigkeit des Spikes unter Berücksichtigung des bei dem geplanten Einsatz des Reifens für Traktion oder Bremsen zu erwartenden Schlupfes. Durch die Ausbildung des Mittenteils und des Oberflansches mit einfacher geometrischer Struktur und die gemeinsame Schwerpunktsachse der verschiedenen Spikeabschnitte wird dabei sowohl eine sichere und einfache Herstellung der Spikes ohne komplizierte Hinterschnitte als auch deren Einbringung der Spikes in den Reifen ermöglicht, sowie ein sicheres Anvulkanisieren an die umgebende Gummimatrix. Die Haltbarkeit und Funktionsfähigkeit können hierdurch verbessert werden.

Besonders vorteilhaft ist die Ausbildung eines Fahrzeugreifens gemäß den Merkmalen von Anspruch 2, wobei a>b ausgebildet ist. Auf diese Weise wird ermöglicht, dass der Spike bei Anfahr- und Traktionsbewegungen mit hohem Schlupf eine Spikeeinbettung mit erhöhter Flexibilität aufweist. Hierdurch werden Spannungsspitzen zwischen der in Drehrichtung vorderen Flanke der Spikespitze und der Eisoberfläche abgebaut. Der Spike dringt hierdurch zwar in das Eis ein. Nach dem Eindringen können dann ohne weitere Zerstörung des Eises unter Verzahnung der vorderen Flanke der Spikespitze mit dem Eis Traktionskräfte schneller und zuverlässiger übertragen werden. Somit wird die Traktion verbessert. Gerade im Einsatz mit elektronischer Antischlupfregelung wirkt sich dies besonders vorteilhaft aus. Bei elektronischen Antischlupfregelungen werden die Raddrehzahldifferenzen zur Berechnung der Schlupfzustände verwendet. Besonders beim Anfahren oder Traktion sind die ermittelten Raddrehzahlen aufgrund der geringen Fahrzeuggeschwindigkeit eher ungenau und auch die Abschätzung der Schlupfzustände sind folglich auch etwas ungenau. Darüber hinaus ist auch die Regelungskette über das Motordrehmoment langsam und etwas träge. Daraus resultiert, dass die relativen Schlüpfe besonders beim Beginn des Anfahrprozesses besonders hoch sind. Somit ist gerade beim Einsatz mit elektronischer Antriebsregelung die Ausbildung mit ihrer schnelleren und zuverlässigeren Übertragung der Traktionskräfte besonders vorteilhaft. Dabei ermöglicht die Ausbildung auch eine besondere Verstärkung der über den Spike übertragenen Bremskräfte, da durch die lange Dimensionierung von "a" ein großer Hebelarm bewirkt und somit große Kippmomente übertragen werden. Gerade beim Einsatz mit elektronischer Antischlupfregelung wirkt sich dies besonders vorteilhaft aus. Bei elektronisch unterstützten und geregelten Bremsmanövern sind die ermittelten realen Drehzahlen in einem ersten Anbremszyklus mit hohem Schlupf relativ genau und ermöglichen durch schnelle Reaktionsfähigkeit des Bremssystems die auftretenden Schlupfzustände wirksam auf ein Minimum zu reduzieren. Deswegen ist die unter dieser Belastung relativ steife Spikeeinbettung der Ausbildung besonders vorteilhaft. Somit ist die Ausbildung gerade in Verbindung mit elektronischer Antischlupfregelung sehr wirkungsvoll.

Besonders vorteilhaft ist die Ausbildung eines Fahrzeugreifens gemäß den Merkmalen von Anspruch 3, wobei a<b ausgebildet ist. Hierdurch können Traktion und Bremseigenschaften auf Eis im Einsatz ohne elektronische Antischlupfregelung und ohne Antiblockiersystem verbessert werden Bei diesem Einsatz ist der Schlupf bei Traktion relativ gering und bei dem ungeregelten, vom Autofahrer rein selbst bewirkten Bremsen hoch. Der Ausbildung mit größerem Abstand b ermöglicht es, dass beim Bremsen mit hohem Schlupf eine Spikeeinbettung mit erhöhter Flexibilität erzielt wird. Die Bremskräfte können so wirksamer übertragen werden. Außerdem kann den Kippwirkungen bei Traktion sicher entgegengewirkt werden und der Spike mit seinen Spitzen in der vorderen Griffkante der Spikespitze optimal in das Eis eingreifen. Gerade beim Einsatz an Fahrzeugen ohne elektronische Antischlupfregelung ist diese Ausbildung besonders vorteilhaft. Beim Fahren ohne elektronische Antischlupfregelung versucht der Fahrer beim Anfahren durch vorsichtiges Gas geben und langsames "Einschleifen lassen" der Kupplung von sich aus große Schlupfbedingungen und einen unsicheren Fahrzustand zu vermeiden. In Nothaltsituationen betätigt der Fahrer das Bremspedal mit maximaler Kraft. Wird dabei die Haftreibungsgrenze überschritten, blockieren die Räder und hoher Schlupf tritt auf. Die Ausbildung ermöglicht somit eine Optimierung unter Berücksichtigung der beim Fahren ohne elektronische Antischlupfregelung hohen Schlupfbewegungen beim Bremsen und der geringen Schlupfbewegungen bei der Traktion beim Anfahren.

Besonders vorteilhaft ist die Ausbildung eines Fahrzeugreifens gemäß den Merkmalen von Anspruch 4, wobei die in Drehrichtung nachgeordnete Griffkante des Spikepins ist mit einem oder mehreren - insbesondere konkav oder konvex - gekrümmten oder geradlinig erstreckten Abschnitt(en) ausgebildet. Die Ausbildung ermöglicht in einfacher Weise eine große wirksame Gesamtlänge der nachgeordneten Griffkante bei hoher Haltbarkeit. Die nachgeordnete Griffkante spielt bei der Übertragung von Bremskräften eine besondere Rolle. Besonders hohe Bremskräfte können bei geringem Reifenschlupf übertragen werden. Deswegen ist es wünschenswert die nachgeordnete Griffkante mit großer Gesamtlänge auszubilden, um eine größtmögliche Abstützung bei der Verzahnung mit der Eisoberfläche zu gewährleisten. Die Ausbildung mit gekrümmten Griffkantenabschnitten ermöglicht dabei, dass trotz besonders großer wirksamer Gesamtlänge im sensiblen nachgeordneten Griffkantenbereich spitz zulaufende Kantenübergänge und eventuelle Abbruchtendenzen vermieden werden können. Hierdurch können Spikepins bei großer wirksamer Kantenlänge jedoch mit reduziertem Volumen und Spikegewicht hergestellt werden. Hierdurch kann der Straßenverschleiß reduziert werden ohne die wichtigen Wintereigenschaften nachteilig zu beeinflussen.

Besonders vorteilhaft ist die Ausbildung eines Fahrzeugreifens gemäß den Merkmalen von Anspruch 5, wobei der Fuß flansch in den senkrecht zur Längserstreckungsrichtung des Spikes ausgebildeten Schnittebenen im Abstand a von der gemeinsamen Geraden der gemeinsamen Geraden vorgeordnet von einem geradlinig erstreckt ausgebildeten Erstreckungsabschnitt begrenzt wird und zwischen diesem geradlinig erstreckten Erstreckungsabschnitt und dem der gemeinsamen Geraden nachgeordneten Punkt der Schnittkontur im Abstand b zur gemeinsamen Geraden einem mit kreissegmentförmiger, mit ovalsegmentförmiger oder mit ellipsensegmentförmiger Schnittkontur ausgebildet sind, wobei die längere Hauptachse des Ovals bzw. der Ellipse in Umfangsrichtung U des Reifens ausgerichtet ist. Durch diese Ausbildung können in einfacher Weise die Bettungssteifigkeit und die Hebelverhältnisse am Spikefuß für die auftretenden Schlupfbewegungen bei Fahren ohne elektronische Antischlupfregelung optimiert und ein gleichmäßiger Anpressdruck der umgebenden Gummimatrix auf den Spikekörper zur Anvulkanisation erzielt werden.

Besonders vorteilhaft ist die Ausbildung eines Fahrzeugreifens gemäß den Merkmalen von Anspruch 6, wobei der Fußflansch in den senkrecht zur Längserstreckungsrichtung des Spikes ausgebildeten Schnittebenen im Abstand b von der gemeinsamen Geraden g der gemeinsamen Geraden g nachgeordnet von einem geradlinig erstreckt ausgebildeten Erstreckungsabschnitt begrenzt wird und zwischen diesem geradlinig erstreckten Erstreckungsabschnitt und dem der gemeinsamen Geraden g vorgeordneten Punkt der Schnittkontur im Abstand a zur gemeinsamen Geraden g einem mit kreissegmentförmiger, mit ovalsegmentförmiger oder mit ellipsensegmentförmiger Schnittkontur ausgebildet sind, wobei die längere Hauptachse des Ovals bzw. der Ellipse in Umfangsrichtung U des Reifens ausgerichtet ist. Durch diese Ausbildung können in einfacher Weise die Bettungssteifigkeit und die Hebelverhältnisse am Spikefuß für die auftretenden Schlupfbewegungen beim Fahren mit elektronischer Antischlupfregelung mit hohen Schlupfbewegungen bei Traktion und geringen Schlupfbewegungen beim Bremsen optimiert und ein gleichmäßiger Anpressdruck der umgebenden Gummimatrix auf den Spikekörper zur Anvulkanisation erzielt werden.

Besonders vorteilhaft ist die Ausbildung eines Fahrzeugreifens gemäß den Merkmalen von Anspruch 7, wobei die in Drehrichtung bei Vorwärtsfahrt vorgeordnete Griffkante in Drehrichtung mit zwei spitz aufeinander zulaufenden, geradlinig erstreckten Griffkantenabschnitten ausgebildet ist, wobei zwischen den beiden spitz zu laufenden Griffkantenabschnitten ein mittlerer, geradlinig erstreckter Griffkantenabschnitt ausgebildet, wobei das in Drehrichtung vorgeordnete Erstreckungsende des einen der beiden spitz aufeinander zulaufenden Griffkantenabschnitte unter Bildung einer Knickstelle in das eine Erstreckungsende des mittleren Griffkantenabschnitts übergeht und wobei das in Drehrichtung vorgeordnete Erstreckungsende des anderen der beiden spitz aufeinander zulaufenden Griffkantenabschnitte unter Bildung einer Knickstelle in das andere Erstreckungsende des mittleren Griffkantenabschnitts übergeht. Die Gestaltung der vorgeordneten Griffkante hat sowohl besonderen Einfluss auf die Griffeigenschaften als auch auf den Straßenverschleiß. Sie muss sicher in die Eisoberfläche eindringen können, da sich der Spike sonst nicht mechanisch verzahnen kann. Die beiden spitz zulaufenden Griffkantenabschnitte ermöglichen in einfacher Weise ein wirkungsvolles Eindringen der Griffkante in das Eis, da die beim Abrollen des Reifens effektiv auftreffende Kantenlänge auf die Länge des mittleren Griffkantenabschnitts reduziert werden kann. Der mittlere Griffkantenabschnitt ermöglicht beim Eindringen in die Eisoberfläche eine entsprechende Verzahnungsstirnfläche für guten Wintergriff. Dabei wird außerdem sichergestellt, dass der Spikepin nicht punktuell auf die Straßenoberfläche auftrifft, sondern über die Kante des mittleren Griffkantenabschnitts abrollt, wodurch der Verschleiß der Straßenoberfläche reduziert werden kann.

Besonders vorteilhaft ist die Ausbildung eines Fahrzeugreifens gemäß den Merkmalen von Anspruch 8, wobei der mittlere Griffkantenabschnitt in axialer Richtung des Reifens erstreckt ausgerichtet ist. Bei der Übertragung von Kräften steht die resultierende Kraft immer senkrecht auf der Spikepinoberfläche, jedoch nur der in Umfangsrichtung weisende Anteil kann für die Übertragung von Brems- oder Traktionskräften genutzt werden. Die anderen Richtung weisenden Kraftvektoren erzeugen Blindspannungen im Eis, welche zu "frühzeitigen" Eisbruch und damit zu einer verminderten Kraftübertragung durch Verzahnung führen können. Diese Ausbildung des mittleren Abschnitts ermöglicht eine Optimierung der Wintereigenschaften, weil alle Kraftvektoren im mittleren Griffkantenabschnitt in Umfangsrichtung weisen und so das Auftreten von Blindkräften verhindert wird.

Besonders vorteilhaft ist die Ausbildung eines Fahrzeugreifens gemäß den Merkmalen von Anspruch 9, wobei die in Drehrichtung nachgeordnete Griffkante des Spikepins mit zwei entgegen der Drehrichtung spitz aufeinander zulaufenden, geradlinig erstreckten Griffkantenabschnitten und mit einem zwischen den beiden spitz aufeinander zulaufenden Griffkantenabschnitten ausgebildeten mittleren, konkav gekrümmten Griffkantenabschnitt ausgebildet, wobei das in Drehrichtung nachgeordnete Erstreckungsende des einen der beiden spitz aufeinander zulaufenden Griffkantenabschnitte unter Bildung einer Knickstelle in das eine Erstreckungsende des mittleren Griffkantenabschnitts übergeht und wobei das in Drehrichtung nachgeordnete Erstreckungsende des anderen der beiden spitz aufeinander zulaufenden Griffkantenabschnitte unter Bildung einer Knickstelle in das andere Erstreckungsende des mittleren Griffkantenabschnitts übergeht. Die Ausbildung ermöglicht in einfacher Weise eine große wirksame Gesamtlänge der nachgeordneten Griffkante bei hoher Haltbarkeit. Die nachgeordnete Griffkante spielt bei der Übertragung von Bremskräften eine besondere Rolle. Besonders hohe Bremskräfte können bei geringem Reifenschlupf übertragen werden. Deswegen ist es wünschenswert die nachgeordnete Griffkante mit großer Gesamtlänge auszubilden, um eine größtmögliche Abstützung bei der Verzahnung mit der Eisoberfläche zu gewährleisten. Die Ausbildung mit dem mittleren Griffkantenabschnitt ermöglicht dabei, dass trotz großer wirksamer Gesamtlänge im sensiblen nachgeordneten Griffkantenbereich spitz zulaufende Kantenübergänge und eventuelle Abbruchtendenzen vermieden werden können.

Besonders vorteilhaft ist die Ausbildung eines Fahrzeugreifens gemäß den Merkmalen von Anspruch 10, wobei die umlaufenden Griffkante in axialer Richtung zu beiden Seiten hin jeweils eine seitliche Griffkante bildet, wobei die seitliche Griffkante jeweils einen Erstreckungsabschnitt aufweist, in welchem die Griffkante geradlinig in Umgangsrichtung U des Reifens erstreckt ausgerichtet ist. Hierdurch kann zusätzlich die Seitenführung weiter begünstigt werden.

Die Erfindung wird im Folgenden an Hand der in den Figuren 1 bis 11 dargestellten Ausführungsbeispiele näher erläutert. Hierin zeigen
- Fig.1: einen Umfangsabschnitt eines Fahrzeugluftreifens mit Spikes in Draufsicht,
- Fig.2: eine vergrößerte Darstellung eines Spikes des Laufstreifenprofils von Fig.1 in Draufsicht,
- Fig.3: den Spike von Fig.2 in Seitenansicht gemäß in Sichtrichtung III-III von Fig.2,
- Fig.4: den Spike von Fig.2 in anderer Seitenansicht in Sichtrichtung IV-IV von Fig.2,
- Fig.5: den Spike von Fig.2 in anderer Seitenansicht gemäß Sichtrichtung V-V von Fig.2,
- Fig.6: den Spike von Fig.2 in einer perspektivischen Darstellung,
- Fig.7: eine vergrößerte Darstellung eines Spikes von Fig.2 in alternativer Ausbildung,
- Fig.8: den Spike von Fig.7 in Seitenansicht gemäß in Sichtrichtung VIII-VIII von Fig.7,
- Fig.9: den Spike von Fig.7 in anderer Seitenansicht in Sichtrichtung IX-IX von Fig.7,
- Fig.10: den Spike von Fig.7 in anderer Seitenansicht gemäß Sichtrichtung X-X von Fig.7 und
- Fig.11: den Spike von Fig.7 in einer perspektivischen Darstellung.

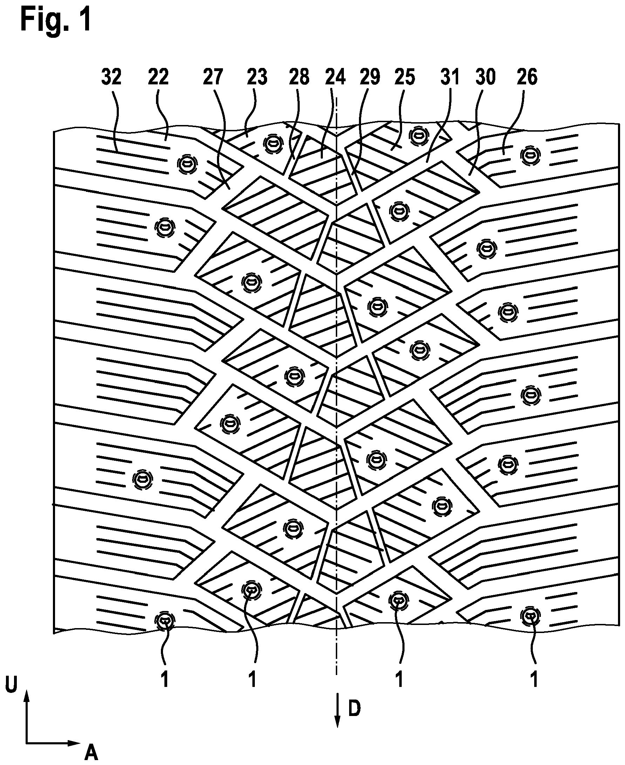

Fig.1 zeigt ein Laufstreifenprofil eines drehrichtungsgebundenen Fahrzeugluftreifens für PKW-Reifen mit Wintereigenschaften mit mehreren in axialer Richtung A des Fahrzeugluftreifens nebeneinander angeordneten Profilblockreihen 22, 23, 24, 25 und 26 bekannter Art. Die Profilblockreihe 22 ist in bekannter Weise in Umfangsrichtung U über den gesamten Umfang des Fahrzeugluftreifens erstreckt ausgerichtet und aus in Umfangsrichtung U des Fahrzeugluftreifens hintereinander angeordneten und durch Querrillen 31 voneinander getrennten Profilblockelementen ausgebildet. Ebenso ist die Profilblockreihe 23, die Profilblockreihe 24 und die Profilblockreihe 25 jeweils in Umfangsrichtung U über den gesamten Umfang des Fahrzeugluftreifens erstreckt ausgerichtet und in bekannter Weise aus in Umfangsrichtung U hintereinander angeordneten und jeweils durch Querrillen 31 voneinander getrennten Profilblockelementen ausgebildet. Ebenso ist die Profilblockreihe 26 in Umfangsrichtung U über den gesamten Umfang des Fahrzeugluftreifens erstreckt ausgerichtet und in bekannter Weise aus in Umfangsrichtung U hintereinander angeordneten und jeweils durch Querrillen 31 voneinander getrennten Profilblockelementen ausgebildet. Die Profilblockreihen 22 und 26 sind Schulterprofilblockreihen. Die Profilblockreihen 23, 24 und 25 sind im zentralen Erstreckungsabschnitt des Profils ausgebildet. Die Profilblockelemente der Profilblockreihe 22 und die benachbarten Profilblockelemente der Profilblockreihe 23 sind durch in Umfangsrichtung U erstreckte Umfangsrillen 27 bekannter Art in axialer Richtung A voneinander getrennt ausgebildet. Die Profilblockelemente der Profilblockreihe 23 und die benachbarten Profilblockelemente der Profilblockreihe 24 sind durch Umfangsrillen 28 in axialer Richtung A voneinander getrennt ausgebildet. Die Profilblockelemente der Profilblockreihe 24 und die benachbarten Profilblockelemente der Profilblockreihe 25 sind durch Umfangsrillen 29 in axialer Richtung A voneinander getrennt angeordnet. Die Profilblockelemente der Profilblockreihe 25 und die benachbarten Profilblockelemente der Profilblockreihe 26 sind durch Umfangsrillen 30 in axialer Richtung A voneinander getrennt angeordnet.

Die Querrillen 31 erstrecken sich V-förmig über den gesamten axialen Erstreckungsbereich des Laufstreifenprofils ausgehend von der in der linken Schulter ausgebildeten Profilblockreihe 22 bis zu der in der rechten Schulter ausgebildeten Profilblockreihe 26 durch das Laufstreifenprofil.

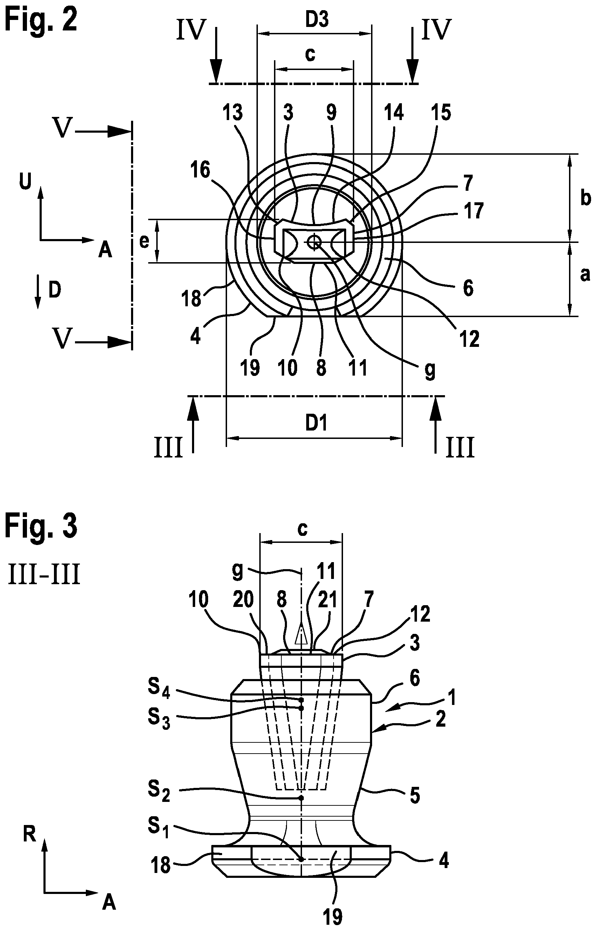

In Fig.1 und Fig.2 ist die Drehrichtung D des Fahrzeugluftreifens bei Vorwärtsfahrt eingetragen.

In den Profilblockreihen 22, 23, 25 und 26 sind jeweils über den Umfang verteilt in verschiedenen Profilblockelementen Spikes 1 Spikelöchern bekannter Art befestigt, welche in bekannter Weise zur Aufnahme der Spikes 1 in den Profilblockelementen ausgebildet sind.

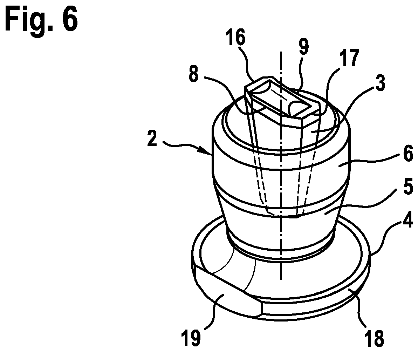

Fig.2 zeigt die Darstellung eines Spikes 1 in vergrößerter Darstellung und zwecks vereinfachter Darstellung ohne das umgebende Gummimaterial des Fahrzeugluftreifens. Der Spike 1 ist - wie in den Figuren 2 bis 6 dargestellt ist - in bekannter Weise aus einem Spikekörper 2 und aus einem Spikepin 3 ausgebildet. Der Spikekörper 2 ist in radialer Richtung R des Fahrzeugluftreifens gesehen von innen nach außen hin in bekannter Weise mit einem Fußflansch 4, einem sich daran anschließenden, taillierten Mittenteil 5 und einem sich daran anschließenden Oberflansch 6 ausgebildet. Der Spikekörper 2 ist in radialer Richtung R des Fahrzeugluftreifens mit einer Höhe H ausgebildet.

Der Oberflansch 6 erstreckt sich dabei in radialer Richtung R des Fahrzeugluftreifens über eine Erstreckungshöhe H₃ mit 0mm ≤ H₃ ≤ (0,92 H) und ist mit einer zylindrischen Mantelfläche mit einem Zylinderdurchmesser D₃ ausgebildet. Im Übergang in radialer Richtung R des Reifens nach außen hin zur Stirnfläche des Spikekörpers 2 sowie nach innen zum taillierten Mittenteil 5 ist der Oberflansch 6 konzentrisch zur Zylinderachse angefast. Bei herkömmlichen PKW- oder VAN-Reifen ist die Erstreckungshöhe H₃ mit (0,25H) ≤ H₃ ≤ (0,48 H) gewählt ausgebildet.

Der Fußflansch 4 ist mit einer in radialer Richtung R des Fahrzeugluftreifens erstreckten Erstreckungshöhe H₁ ausgebildet mit (0,08 H) ≤ H₁ ≤ (0,4 H). Bei herkömmlichen PKW-oder VAN-Reifen ist die Erstreckungshöhe H₁ mit (0,1 H) ≤ H₁ ≤ (0,2 H) gewählt ausgebildet.

Der Fußflansch 4 ist mit zylinderförmigen Mantelfläche aus einem Mantelflächenabschnitt 18 und einem Mantelflächenabschnitt 19 ausgebildet, wobei der Mantelflächenabschnitt 18 das Segment einer Zylindermantelfläche mit Zylinderachse und Durchmesser D1 bildet und der Mantelflächenabschnitt 19 eine ebene Fläche bildet, die die gedachte vervollständigte Zylindermantelfläche des Segments parallel zur Zylinderachse schneidet.

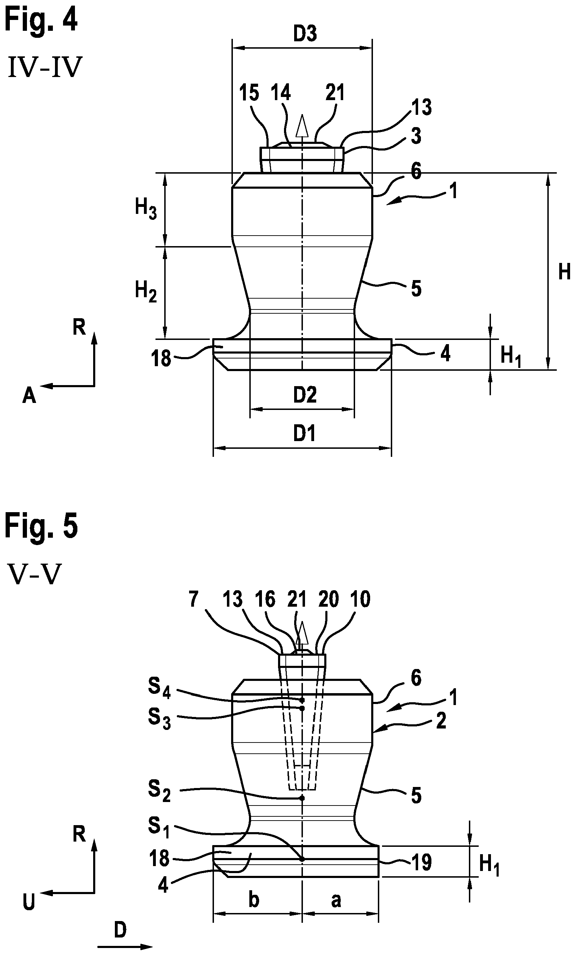

Wie in Fig. 2 und Fig.5 zu erkennen ist, ist der Mantelflächenabschnitt 19 in den Schnittebenen senkrecht zur Haupterstreckungsrichtung des Spikes 1 und somit senkrecht zur radialen Erstreckungsrichtung R des Reifens geradlinig erstreckt ausgebildet und der Abschnitt 18 kreissegmentförmig. Der Mantelflächenabschnitt 19 und somit die geradlinigen Schnittkonturlinien sind in Drehrichtung D der Position des Massenschwerpunktes S₁ des Fußflansches 18 im Abstand a zur Position des Massenschwerpunktes S₁ vorgeordnet positioniert. Der zylindersegmentförmige Mantelabschnitt 18 und somit die kreissegmentförmige Schnittkonturlinie erstrecken sich entgegen der Drehrichtung D bis in eine Position in Abstand b vom Massenschwerpunkt S₁ des Fußflansches 4. Die Abstände b und a sind dabei mit b > a ausgebildet. Ebenso ist (a + b) < D₁ ausgebildet.

Wie in den Figuren 3 bis 6 zu erkennen ist, ist auch der Fußflansch 4 in seinem Übergang zu der den Spikekörper 2 in radialer Richtung R des Reifens nach innen hin begrenzenden Stirnfläche angefasst ausgebildet. Das Mittenteil 5 des Spikekörpers 2 ist in bekannter Weise tailliert ausgebildet und erstreckt sich über eine in Längserstreckungsrichtung des Spikes 1 und somit in radialer Richtung R des Reifens gemessene Erstreckungshöhe H₂ mit 0mm ≤ H₂ ≤ (0,92 H). Bei herkömmlichen PKW- oder VAN-Reifen ist die Erstreckungshöhe H₂ mit (0,4H) ≤ H₂ ≤ (0,55 H) gewählt ausgebildet.

Das Mittenteil 5 ist in allen Querschnittsebenen senkrecht zur Haupterstreckungsrichtung des Spikes 1 und somit zur radialen Erstreckungsrichtung R des Reifens mit einer kreisförmigen Schnittkontur seiner Mantelfläche ausgebildet. Der Durchmesser der kreisförmigen Schnittkonturen wird dabei ausgehend vom Durchmesser D₃ in der Position des Überganges zum Oberflansch 6 längs der Erstreckung des Spikes 1 in Richtung zum Fußflansch 4 hin kontinuierlich kleiner bis zur Erreichung eines Minimalwertes D₂ und nach Erreichen dieses minimalen Wertes bis zum Übergang zum Fuß flansch 4 kontinuierlich größer.

In dem den Spikekörper 2 an dessen Oberflansch 6 in radialer Richtung R des Reifens nach außen hin begrenzenden Stirnfläche ist in bekannter Weise eine Öffnung zur Aufnahme und zur Befestigung des Spikepins 3 ausgebildet, in welcher der Spikepin im montierten Zustand im Fahrzeugluftreifen befestigt ist. Der Spikepin 3 erstreckt sich im Reifen von der am Oberflansch 6 des Spikekörpers 2nach radial außen begrenzenden Stirnfläche in radialer Richtung R des Fahrzeugluftreifens weiter nach außen und bildet dabei die Spikespitze. Die Spikespitze und somit der Spikepin 3 ist in radialer Richtung R des Reifens nach außen hin mit einem ein Plateau 20 bildenden Fläche begrenzt. Der Übergang zwischen der Mantelfläche des Spikepins 3 und dem Plateau 20 ist scharfkantig und bildet dabei eine um den Spikepin 3 umlaufende Griffkante 7. In radialer Richtung R nach außen hin erstreckt sich in bekannter Weise mit Abstand zur Griffkante 7 eine radiale Erhebung 21 aus dem Plateau 20, welche das Abrollen erleichtern kann.

Die umlaufende Griffkante 7 ist mit einer in Drehrichtung D bei Vorwärtsfahrt an seinem vorgeordneten Erstreckungsabschnitt mit einer vorgeordneten Griffkante 8 und an seinem in Drehrichtung D bei Vorwärtsfahrt nachgeordneten Erstreckungsabschnitt mit einem nach nachgeordneten Griffkante 9 und mit in axialer Richtung A des Fahrzeugluftreifens den Spikepin 3 begrenzenden Griffkantenabschnitten 16 und 17 ausgebildet, welche beide jeweils in Umfangsrichtung U des Fahrzeugluftreifens erstreckt ausgerichtet sind.

Die vorgeordnete Griffkante 8 ist aus zwei seitlichen, jeweils geradlinig erstreckten Griffkantenabschnitten 10 und 12 und einem in axialer Richtung A des Fahrzeugluftreifens zwischen den beiden seitlichen Griffkantenabschnitten 10 und 12 angeordneten mittleren Erstreckungsabschnitt 11 ausgebildet. Die seitlichen, geradlinigen Griffkantenabschnitte 10 und 12 sind dabei in Drehrichtung D gesehen V- oder pfeilförmig spitz aufeinander zulaufend ausgerichtet ausgebildet. Der mittlere Erstreckungsabschnitt 11 ist geradlinig in axialer Richtung A des Fahrzeugluftreifens erstreckt ausgerichtet ausgebildet. Das in Drehrichtung D gesehen vordere Erstreckungsende des seitlichen Griffkantenabschnitts 10 bildet dabei das eine zum Griffkantenabschnitt 10 hin gerichtete Erstreckungsende des mittleren Erstreckungsabschnitts 11 und geht dort unter Einschluss eine Knickes im Erstreckungsverlauf der vorgeordneten Griffkante 8 und somit der umlaufenden Griffkante 7 in den mittleren Erstreckungsabschnitt 11 über. Ebenso bildet das in Drehrichtung D gerichtete, vordere Erstreckungsende des seitlichen Griffkantenabschnitts 12 das zum seitlichen Erstreckungsabschnitt 12 gerichtete Erstreckungsende des mittleren Erstreckungsabschnitt 11 und geht dort unter Einschluss eines Knickes im Erstreckungsverlauf der vorgeordneten Griffkante 8 und somit der umlaufenden Griffkante 7 in den mittleren Erstreckungsabschnitt 11 über.

Das in Drehrichtung D gesehen hintere Erstreckungsende des seitlichen Griffkantenabschnitts 10 bildet das in Drehrichtung D gesehen vordere Erstreckungsende des Griffkantenabschnitts 16 und geht unter Einschluss eines Knickes im Erstreckungsverlauf der umlaufenden Griffkante 7 in den Griffkantenabschnitt 16 über. Ebenso bildet das in Drehrichtung D gesehene hintere Erstreckungsende des seitlichen Griffkantenabschnitts 12 das in Drehrichtung D vordere Ende des Griffkantenabschnitts 17 und geht dort unter Einschluss eines Knickes im Erstreckungsverlauf der umlaufenden Griffkante 7 in den Griffkantenabschnitt 17 über.

Die in Drehrichtung D nachgeordnete Griffkante 9 ist aus zwei seitlichen erstreckten Griffkantenabschnitten 13 und 15 und einem in axialer Richtung A des Fahrzeugluftreifens zwischen den beiden seitlichen Griffkantenabschnitten 13 und 15 angeordneten mittleren Erstreckungsabschnitt 14 ausgebildet. Die seitlichen Griffkantenabschnitte 13 und 15 sind geradlinig erstreckt und entgegen der Drehrichtung D gesehen V- oder pfeilförmig spitz aufeinander zulaufend ausgerichtet ausgebildet. Der mittlere Erstreckungsabschnitt 14 ist mit einem konkav gekrümmten Krümmungsverlauf ausgebildet, d.h. der Krümmungsradius des Krümmungsverlaufes 14 ist auf der vom Spikepin 3 wegweisenden Seite der Krümmungslinie ausgebildet.

Das in Drehrichtung D nachgeordnet ausgebildete Erstreckungsende des seitlichen Griffkantenabschnitts 13 bildet das zum Griffkantenabschnitt 13 hin gebildete Erstreckungsende des mittleren Erstreckungsabschnitt 14 und geht dort unter Einschluss eines Knickes im Erstreckungsverlauf der hinteren Griffkante 9 und somit der umlaufenden Griffkante 7 in den Erstreckungsabschnitt 14 über. Das in Drehrichtung D nachgeordnet ausgebildete Erstreckungsende des seitlichen Griffkantenabschnitts 15 bildet das zum Griffkantenabschnitt 15 hin gebildete Erstreckungsende des mittleren Erstreckungsabschnitt 14 und geht dort unter Einschluss eines Knickes im Erstreckungsverlauf der hinteren Griffkante 9 und somit der umlaufenden Griffkante 7 in den Erstreckungsabschnitt 14 über.

Das in Drehrichtung D vorgeordnete Erstreckungsende des Griffkantenabschnitts 13 bildet das in Drehrichtung D nachgeordnete Erstreckungsende des Griffkantenabschnitts 16 und geht dort unter Einschluss eines Knickes im Erstreckungsverlauf der umlaufenden Griffkante 7 in den Griffkantenabschnitt 16 über. Das in Drehrichtung D vorgeordnete Erstreckungsende des Griffkantenabschnitts 15 bildet das in Drehrichtung D nachgeordnete Erstreckungsende des Griffkantenabschnitts 17 und geht dort unter Einschluss eines Knickes im Erstreckungsverlauf der umlaufenden Griffkante 7 in den Griffkantenabschnitt 17 über.

Die Projektion der umlaufenden Griffkante 7 in axialer Richtung A des Reifens weist eine Projektionslänge e auf. Die Projektion der umlaufenden Griffkante 7 in Umfangsrichtung U des Reifens weist eine Projektionslänge c auf, welche der Breite des Spikepins 3 in der radialen Position der Griffkante 7 entspricht und die wirksame Griffkantenlänge des Spikes 1 in Umfangsrichtung U angibt. Die Projektionslänge e entspricht der in Umfangsrichtung U gemessenen Erstreckungslänge des Spikepins 3 in der radialen Position der Griffkante 7 und gibt die wirksame Griffkantenlänge des Spikes in axialer Richtung A des Reifens an. Dabei sind c und e so dimensioniert, dass c > e ausgebildet ist.

Die in axialer Richtung gemessene Erstreckungslänge des mittleren Erstreckungsabschnitts 11 der vorderen Griffkante 8 ist dabei im Bereich von mit 40% bis 80% der Projektionslänge c ausgebildet. Die in axialer Richtung A gemessene Erstreckungslänge des mittleren Erstreckungsabschnitts 14 der hinteren Griffkante 9 ist dabei größer ausgebildet als die in axialer Richtung A gemessene Erstreckungslänge des mittleren Erstreckungsabschnitts 11 der vorderen Griffkante 8.

Wie in den Figuren 3, 5 und 2 dargestellt ist, liegen dem Massenschwerpunkt S₁ des Fußflansches 4 des Spikekörpers 2, der Massenschwerpunkt S₂ des Mittelteils 5 des Spikekörpers 2, der Massenschwerpunkt S₃ des Oberflansches 6 sowie der Massenschwerpunkt S₄ des Spikepins 3 auf einer gemeinsamen Geraden g, welche sich in radialer Richtung R des Fahrzeugluftreifens erstreckt. Auf dieser Geraden liegt auch der nicht eingezeichnete Gesamtmassenschwerpunkt S des Spikes 1.

In den beschriebenen und in den Figuren dargestellten Ausführungsbeispielen ist der Mittelteil 5 sowie der Oberflansch 6 in ihrer Mantelfläche in den Schnittebenen senkrecht zur Haupterstreckungsrichtung des Spikes und zur radialen Erstreckungsrichtung R des Reifens jeweils kreisförmig ausgebildet.

In anderer, nicht dargestellter Ausführung sind die Schnittkonturen der Mantelflächen vom Oberflansch 6 bzw. vom Mittelteil 5 jeweils oval oder elliptisch ausgebildet, wobei die größere Hauptachse des Ovals bzw. der Ellipse in Umfangsrichtung U des Fahrzeugluftreifens ausgerichtet ist. Die oben angegebenen Durchmesser D₂ bzw. D₃ bilden dann jeweils den größeren Durchmesser der jeweiligen Ellipse bzw. des Ovals.

In den oben beschriebenen und in den Figuren dargestellten Ausführungsbeispielen ist der Fußflansch im Bereich seines Mantelflächenabschnitts 18 als zylindersegmentförmig ausgebildet mit kreisförmiger Grundfläche des Zylinders und mit in den Schnittebenen senkrecht zur Haupterstreckungsrichtung des Spikes 1 und zur radialen Erstreckungsrichtung R des Reifens kreissegmentförmiger Schnittlinienkontur der Zylindersegmentform.

In alternativer, nicht dargestellter Ausführung ist der Mantelflächenabschnitt 18 ein zylindersegmentförmiger Abschnitt mit ovaler bzw. elliptischer Grundfläche des Zylinders und mit in den Schnittebenen senkrecht zur Haupterstreckungsrichtung des Spikes 1 und zur radialen Erstreckungsrichtung R des Reifens ovalsegmentförmiger bzw. ellipsensegmentförmiger Schnittlinienkontur der Zylindersegmentform, wobei die größere Hauptachse der Ellipse bzw. des Ovals in Umfangserstreckungsrichtung U des Fahrzeugluftreifens ausgerichtet ist. Der oben angegebene Durchmesser D₁ entspricht dann dem größeren Durchmesser des Ovals bzw. der Ellipse.

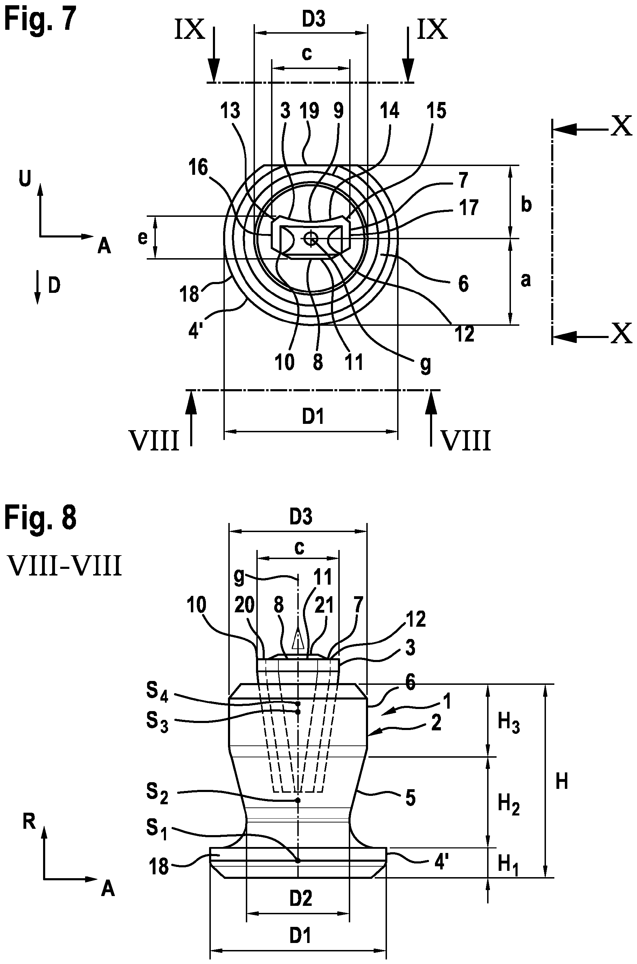

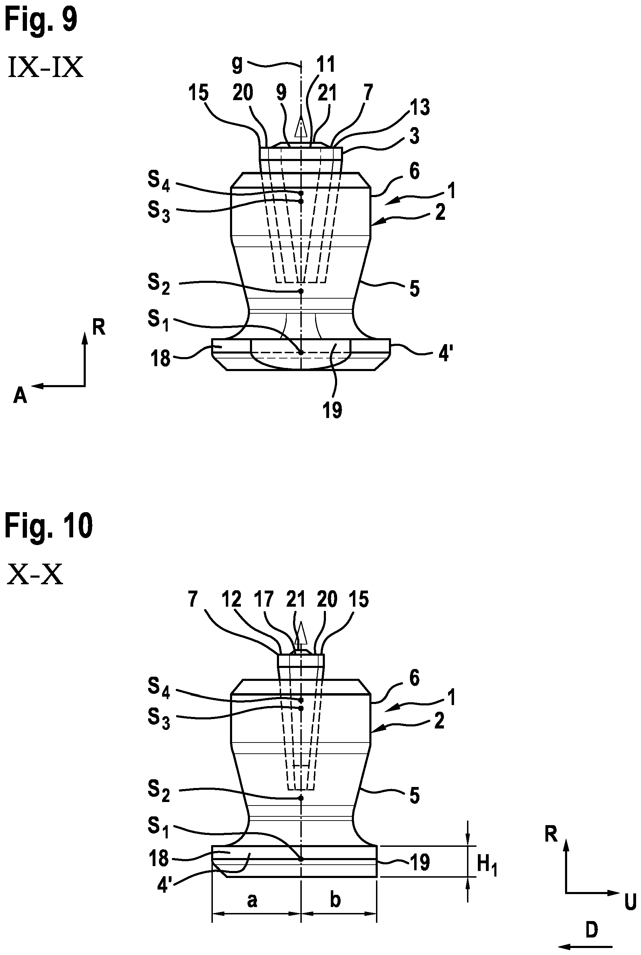

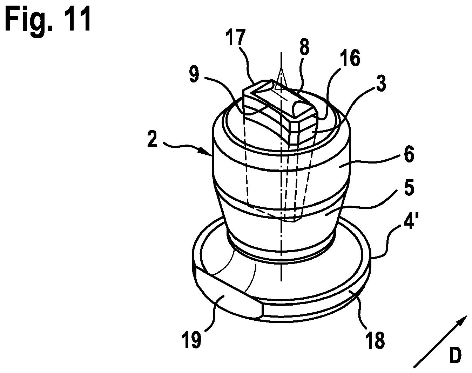

In den Figuren 7 bis 11 ist ein Spike 1 alternativer Ausbildung dargestellt, der wie der in den Figuren 2 bis 6 dargestellte und oben beschriebene Spike 1 ausgebildet. Lediglich der Fußflansch 4' des Spikekörpers 2 ist gegenüber dem in den Figuren 2 bis 8 dargestellten und oben beschriebenen Spike um 180° um die Gerade g verdreht ausgebildet. Der Mantelflächenabschnitt 19 und somit die geradlinigen Schnittkonturlinien sind in Drehrichtung D des Fahrzeugluftreifens der Position des Massenschwerpunktes S₁ des Fußflansches 4 im Abstand b zur Geraden g und zur Position des Massenschwerpunktes S₁ nachgeordnet positioniert. Der zylindersegmentförmige Mantelabschnitt 18 und somit die kreissegmentförmige Schnittkonturlinie erstrecken sich in Drehrichtung D bis in eine Position in Abstand a vor der Geraden und dem Massenschwerpunkt S₁ des Fußflansches 4. Die Abstände b und a sind dabei mit b < a ausgebildet. Auch bei dieser Ausführung ist (a + b) < D₁ ausgebildet.

### Bezugszeichenliste

- 1: Spike
- 2: Spikeköper
- 3: Spikepin
- 4: Fußflansch
- 5: Taillierter Mittenabschnitt
- 6: Oberflansch
- 7: Umlaufende Griffkante
- 8: Vorgeordnete Griffkante
- 9: Nachgeordnete Griffkante
- 10: Griffkantenabschnitt
- 11: Mittlerer Griffkantenabschnitt
- 12: Griffkantenabschnitt
- 13: Griffkantenabschnitt
- 14: Mittlerer Griffkantenabschnitt
- 15: Griffkantenabschnitt
- 16: Griffkantenabschnitt
- 17: Griffkantenabschnitt
- 18: Mantelkonturabschnitt
- 19: Mantelkonturabschnitt
- 20: Plateau
- 21: Erhebung
- 22: Profilblockreihe
- 23: Profilblockreihe
- 24: Profilblockreihe
- 25: Profilblockreihe
- 26: Profilblockreihe
- 27: Umfangsrille
- 28: Umfangsrille
- 29: Umfangsrille
- 30: Umfangsrille
- 31: Querrille
- 32: Feineinschnitt

## Patentansprüche

1. Drehrichtungsgebundener Fahrzeugreifen mit Laufstreifenprofil und Spikes (1), welche aus einem Spikekörper (2) und einem Spikepin (3) bestehen, wobei der Spikepin (3) mit einer umlaufenden Griffkante (7), welche eine in Drehrichtung D bei Vorwärtsfahrt vorgeordnete (8) und eine in Drehrichtung D nachgeordneten Griffkante (9) bildet, welche sich jeweils über die gesamte in axialer Richtung A des Reifens ausgebildete Breite des Spikepins (3) erstrecken, wobei die in Umfangsrichtung U des Reifens wirksame Griffkantenlänge c der umlaufenden Griffkante (7) größer ist als die in axialer Richtung A wirksame Griffkantenlänge e, wobei die in Drehrichtung D bei Vorwärtsfahrt vorgeordnete Griffkante (8) in Drehrichtung D mit zwei spitz aufeinander zulaufenden Griffkantenabschnitten (10,12) ausgebildet ist, wobei der Spikekörper (2) aus einem Fuß flansch (4), einem Mittenabschnitt (5) und einem Oberflansch (6) ausgebildet ist, wobei der Oberflansch (6) und der Mittenabschnitt (5) in den senkrecht zur Längserstreckungsrichtung des Spikes (1) ausgebildeten Schnittebenen jeweils mit runder, ovaler oder elliptischer Schnittkontur ausgebildet sind,
**dadurch gekennzeichnet,**
**dass** der Schwerpunkt S₄ des Spikepins (3), der Schwerpunkt S₃ des Oberflansches (6), der Schwerpunkt S₂ des Mittenabschnittes (5) und der Schwerpunkt S₁ des Fußflansches (4) auf einer gemeinsamen Geraden g angeordnet sind, und
**dass** in den senkrecht zur Längserstreckungsrichtung des Spikes (1) ausgebildeten Schnittebenen der Fuß flansch (4) mit einer Schnittkontur ausgebildet ist, bei der der in Drehrichtung D am weitesten von der gemeinsamen Geraden g entfernte, der Geraden g vorgeordnete Punkt der Schnittkontur mit einem in Drehrichtung D gemessenen Abstand a zur Geraden g angeordnet ist und bei der der in Drehrichtung D am weitesten von der gemeinsamen Geraden g entfernte, der Geraden g nachgeordnete Punkt der Schnittkontur mit einem in Drehrichtung D gemessenen Abstand b zur Geraden angeordnet ist mit a ≠ b.

2. Fahrzeugreifen gemäß den Merkmalen von Anspruch 1,
wobei a>b ausgebildet ist.

3. Fahrzeugreifen gemäß den Merkmalen von Anspruch 1,
wobei a<b ausgebildet ist.

4. Fahrzeugreifen gemäß den Merkmalen von einem der Ansprüche 1 bis 3,
wobei die in Drehrichtung D nachgeordnete Griffkante (9) des Spikepins (3) mit einem oder mehreren - insbesondere konkav oder konvex - gekrümmten oder geradlinig erstreckten Abschnitt(en) (14) ausgebildet ist.

5. Fahrzeugreifen gemäß den Merkmalen von Anspruch 3,
wobei der Fußflansch (4) in den senkrecht zur Längserstreckungsrichtung des Spikes (1) ausgebildeten Schnittebenen im Abstand a von der gemeinsamen Geraden g der gemeinsamen Geraden g vorgeordnet von einem geradlinig erstreckt ausgebildeten Erstreckungsabschnitt (19) begrenzt wird und zwischen diesem geradlinig erstreckten Erstreckungsabschnitt (19) und dem der gemeinsamen Geraden g nachgeordneten Punkt der Schnittkontur im Abstand b zur gemeinsamen Geraden g einem mit kreissegmentförmiger, mit ovalsegmentförmiger oder mit ellipsensegmentförmiger Schnittkontur (18) ausgebildet sind, wobei die längere Hauptachse des Ovals bzw. der Ellipse in Umfangsrichtung U des Reifens ausgerichtet ist.

6. Fahrzeugreifen gemäß den Merkmalen von Anspruch 2,
wobei der Fußflansch (4) in den senkrecht zur Längserstreckungsrichtung des Spikes (1) ausgebildeten Schnittebenen im Abstand b von der gemeinsamen Geraden g der gemeinsamen Geraden g nachgeordnet von einem geradlinig erstreckt ausgebildeten Erstreckungsabschnitt (19) begrenzt wird und zwischen diesem geradlinig erstreckten Erstreckungsabschnitt (19) und dem der gemeinsamen Geraden g vorgeordneten Punkt der Schnittkontur im Abstand a zur gemeinsamen Geraden g einem mit kreissegmentförmiger, mit ovalsegmentförmiger oder mit ellipsensegmentförmiger Schnittkontur (18) ausgebildet sind, wobei die längere Hauptachse des Ovals bzw. der Ellipse in Umfangsrichtung U des Reifens ausgerichtet ist.

7. Fahrzeugreifen gemäß den Merkmalen von einem der vorangegangenen Ansprüche,
wobei die in Drehrichtung D bei Vorwärtsfahrt vorgeordnete Griffkante (8) in Drehrichtung D mit zwei spitz aufeinander zulaufenden, geradlinig erstreckten Griffkantenabschnitten (10,12) ausgebildet ist, wobei zwischen den beiden spitz zu laufenden Griffkantenabschnitten (10,12) ein mittlerer, geradlinig erstreckter Griffkantenabschnitt (11) ausgebildet, wobei das in Drehrichtung D vorgeordnete Erstreckungsende des einen (10) der beiden spitz aufeinander zulaufenden Griffkantenabschnitte (10,12) unter Bildung einer Knickstelle in das eine Erstreckungsende des mittleren Griffkantenabschnitts (11) übergeht und wobei das in D Drehrichtung vorgeordnete Erstreckungsende des anderen (12) der beiden spitz aufeinander zulaufenden Griffkantenabschnitte (10,12) unter Bildung einer Knickstelle in das andere Erstreckungsende des mittleren Griffkantenabschnitts (11) übergeht.

8. Fahrzeugreifen gemäß den Merkmalen von Anspruch 7,
wobei der mittlere Griffkantenabschnitt (11) in axialer Richtung A des Reifens erstreckt ausgerichtet ist.

9. Fahrzeugreifen gemäß den Merkmalen von einem der Ansprüche 4 bis 8,
wobei die in Drehrichtung D nachgeordnete Griffkante (9) des Spikepins (3) mit zwei entgegen der Drehrichtung D spitz aufeinander zulaufenden, geradlinig erstreckten Griffkantenabschnitten (13,15) und mit einem zwischen den beiden spitz aufeinander zulaufenden Griffkantenabschnitten (13,15) ausgebildeten mittleren, konkav gekrümmten Griffkantenabschnitt (14) ausgebildet, wobei das in Drehrichtung D nachgeordnete Erstreckungsende des einen (13) der beiden spitz aufeinander zulaufenden Griffkantenabschnitte (13,15) unter Bildung einer Knickstelle in das eine Erstreckungsende des mittleren Griffkantenabschnitts (14) übergeht und wobei das in Drehrichtung D nachgeordnete Erstreckungsende des anderen (15) der beiden spitz aufeinander zulaufenden Griffkantenabschnitte (13,15) unter Bildung einer Knickstelle in das andere Erstreckungsende des mittleren Griffkantenabschnitts (14) übergeht.

10. Fahrzeugreifen gemäß den Merkmalen von einem der vorangegangenen Ansprüche,
wobei die umlaufende Griffkante (7) in axialer Richtung A zu beiden Seiten hin jeweils eine seitliche Griffkante bildet, wobei die seitliche Griffkante jeweils einen Erstreckungsabschnitt (16,17) aufweist, in welchem die Griffkante (7) geradlinig in Umgangsrichtung U des Reifens erstreckt ausgerichtet ist.

## Claims

1. Directional vehicle tire having a tread profile and having spikes (1) which are composed of a spike body (2) and of a spike pin (3), wherein the spike pin (3) with an encircling grip edge (7) which forms a grip edge (8) situated in front in a direction of rotation D during forward travel and a grip edge (9) situated behind in the direction of rotation D, which grip edges each extend over the entire width, formed in an axial direction A of the tire, of the spike pin (3), wherein the grip edge length c, effective in a circumferential direction U of the tire, of the encircling grip edge (7) is greater than the grip edge length e effective in the axial direction A, wherein the grip edge (8) situated in front in the direction of rotation D during forward travel is formed in the direction of rotation D with two grip edge portions (10, 12) converging on one another in tapering fashion, wherein the spike body (2) is formed from a foot flange (4), a central portion (5) and a top flange (6), wherein the top flange (6) and the central portion (5) are formed in each case with a circular, oval or elliptical section contour in the section planes formed perpendicular to the longitudinal extent direction of the spike (1), **characterized**
**in that** the centre of gravity S₄ of the spike pin (3), the centre of gravity S₃ of the top flange (6), the centre of gravity S₂ of the central portion (5) and the centre of gravity S₁ of the foot flange (4) are arranged on a common straight line g, and
**in that**, in the section planes formed perpendicular to the longitudinal extent direction of the spike (1), the foot flange (4) is formed with a section contour in which that point of the section contour which in the direction of rotation D is furthest remote from the common straight line g and situated in front of the straight line g is arranged at a distance a, measured in the direction of rotation D, from the straight line g and in which that point of the section contour which is furthest remote from the common straight line g and situated behind the straight line g is arranged at a distance b, measured in the direction of rotation D, from the straight line, where a ≠ b.

2. Vehicle tire as per the features of Claim 1,
wherein a>b.

3. Vehicle tire as per the features of Claim 1,
wherein a<b.

4. Vehicle tire as per the features of any of Claims 1 to 3,
wherein that grip edge (9) of the spike pin (3) which is situated behind in the direction of rotation D is formed with one or more - in particular concavely or convexly - curved or rectilinearly extending portion(s) (14).

5. Vehicle tire as per the features of Claim 3,
wherein, in the section planes formed perpendicular to the longitudinal extent direction of the spike (1), the foot flange (4) is delimited, at a distance a from the common straight line g and in front of the common straight line g, by a rectilinearly extending extent portion (19), and, between said rectilinearly extending extent portion (19) and that point of the section contour which is situated behind the common straight line g and at a distance b from the common straight line g, a with a circular-segment-shaped, oval-segment-shaped or ellipse-segment-shaped section contour (18) are formed, wherein the relatively long main axis of the oval or of the ellipse is oriented in the circumferential direction U of the tire.

6. Vehicle tire as per the features of Claim 2,
wherein, in the section planes formed perpendicular to the longitudinal extent direction of the spike (1), the foot flange (4) is delimited, at a distance b from the common straight line g and behind the common straight line g, by a rectilinearly extending extent portion (19), and, between said rectilinearly extending extent portion (19) and that point of the section contour which is situated in front of the common straight line g and at a distance a from the common straight line g, a with a circular-segment-shaped, oval-segment-shaped or ellipse-segment-shaped section contour (18) are formed, wherein the relatively long main axis of the oval or of the ellipse is oriented in the circumferential direction U of the tire.

7. Vehicle tire as per the features of any of the preceding claims,
wherein the grip edge (8) situated in front in the direction of rotation D during forward travel is formed in the direction of rotation D with two rectilinearly extending grip edge portions (10, 12) converging on one another in tapering fashion, wherein a central, rectilinearly extending grip edge portion (11) is formed between the two grip edge portions (10, 12) converging on one another in tapering fashion, wherein that extent end of one (10) of the two grip edge portions (10, 12) converging on one another in tapering fashion which is situated in front in the direction of rotation D transitions, with the formation of a bend, into one extent end of the central grip edge portion (11), and wherein that extent end of the other (12) of the two grip edge portions (10, 12) converging on one another in tapering fashion which is situated in front in the direction of rotation D transitions, with the formation of a bend, into the other extent end of the central grip edge portion (11).

8. Vehicle tire as per the features of Claim 7,
wherein the central grip edge portion (11) is oriented so as to extend in the axial direction A of the tire.

9. Vehicle tire as per the features of any of Claims 4 to 8,
wherein that grip edge (9) of the spike pin (3) which is situated behind in the direction of rotation D is formed with two rectilinearly extending grip edge portions (13, 15) converging on one another in tapering fashion counter to the direction of rotation D and with a central, concavely curved grip edge portion (14) formed between the two grip edge portions (13, 15) converging on one another in tapering fashion, wherein that extent end of one (13) of the two grip edge portions (13, 15) converging on one another in tapering fashion which is situated behind in the direction of rotation D transitions, with the formation of a bend, into one extent end of the central grip edge portion (14), and wherein that extent end of the other (15) of the two grip edge portions (13, 15) converging on one another in tapering fashion which is situated behind in the direction of rotation D transitions, with the formation of a bend, into the other extent end of the central grip edge portion (14).

10. Vehicle tire as per the features of any of the preceding claims,
wherein the encircling grip edge (7) forms in each case one lateral grip edge to both sides in the axial direction A, wherein the lateral grip edge has in each case one extent portion (16, 17) in which the grip edge (7) is oriented so as to extend rectilinearly in the circumferential direction U of the tire.

## Revendications

1. Pneumatique de véhicule associé au sens de rotation avec un profil de bande de roulement et des crampons (1) qui se composent d'un corps de crampon (2) et d'une pointe de crampon (3), la pointe de crampon (3) avec une arête d'accrochage périphérique (7) qui forme une arête d'accrochage amont (8) dans le sens de rotation D dans le cas d'une conduite vers l'avant, et une arête d'accrochage aval (9) dans le sens de rotation D, lesquelles s'étendent à chaque fois sur toute la largeur de la pointe de crampon (3) dans la direction axiale A du pneu, la longueur d'arête d'accrochage effective c de l'arête d'accrochage périphérique (7) dans la direction périphérique U du pneu étant supérieure à la longueur d'arête d'accrochage effective e dans la direction axiale A, l'arête d'accrochage amont (8) dans le sens de rotation D dans le cas d'une conduite vers l'avant étant réalisée dans le sens de rotation D avec deux portions d'arêtes d'accrochage (10, 12) convergeant en pointe l'une vers l'autre, le corps de crampon (2) étant constitué d'une bride de base (4), d'une portion centrale (5) et d'une bride supérieure (6), la bride supérieure (6) et la portion centrale (5) étant réalisées dans les plans de coupe réalisés perpendiculairement à la direction d'étendue longitudinale du crampon (1) à chaque fois avec un contour en coupe circulaire, ovale ou elliptique,
**caractérisé en ce que**
le centre de gravité S₄ de la pointe de crampon (3), le centre de gravité S₃ de la bride supérieure (6), le centre de gravité S₂ de la portion centrale (5) et le centre de gravité S₁ de la bride de base (4) sont disposés sur une droite commune g, et
**en ce que** dans les plans de coupe réalisés perpendiculairement à la direction d'étendue longitudinale du crampon (1), la bride de base (4) est réalisée avec un contour en coupe, dans lequel le point du contour en coupe en amont de la droite g, le plus éloigné de la droite commune g dans le sens de rotation D, est disposé à une distance a de la droite g, mesurée dans le sens de rotation D, et dans lequel le point du contour en coupe en aval de la droite g, le plus éloigné de la droite commune g dans le sens de rotation D, est disposé à une distance b de la droite, mesurée dans le sens de rotation D, avec a ≠ b.

2. Pneumatique de véhicule selon les caractéristiques de la revendication 1, dans lequel a > b.

3. Pneumatique de véhicule selon les caractéristiques de la revendication 1, dans lequel a < b.

4. Pneumatique de véhicule selon les caractéristiques de l'une quelconque des revendications 1 à 3, dans lequel l'arête d'accrochage (9) de la pointe de crampon (3), en aval dans le sens de rotation D, est réalisée avec une ou plusieurs portions (14) s'étendant en ligne droite ou sous forme courbe, en particulier sous forme concave ou convexe.

5. Pneumatique de véhicule selon les caractéristiques de la revendication 3, dans lequel la bride de base (4), dans les plans de coupe réalisés perpendiculairement à la direction d'étendue longitudinale du crampon (1), à une distance a de la droite commune g, en amont de la droite commune g, est limitée par une portion d'étendue (19) réalisée de manière à s'étendre en ligne droite et entre cette portion d'étendue (19) s'étendant en ligne droite et le point du contour en coupe en aval de la droite commune g, à distance b de la droite commune g, sont réalisées à un avec un contour en coupe (18) en forme de segment de cercle, en forme de segment d'ovale ou en forme de segment d'ellipse, l'axe principal le plus long de l'ovale ou de l'ellipse étant orienté dans la direction périphérique U du pneu.

6. Pneumatique de véhicule selon les caractéristiques de la revendication 2, dans lequel la bride de base (4), dans les plans de coupe réalisés perpendiculairement à la direction d'étendue longitudinale du crampon (1), à distance b de la droite commune g, en aval de la droite commune g, est limitée par une portion d'étendue (19) réalisée de manière à s'étendre en ligne droite et entre cette portion d'étendue (19) s'étendant en ligne droite et le point du contour en coupe en amont de la droite commune g, à distance a de la droite commune g, sont réalisées à un avec un contour en coupe (18) en forme de segment de cercle, en forme de segment d'ovale ou en forme de segment d'ellipse, l'axe principal le plus long de l'ovale ou de l'ellipse étant orienté dans la direction périphérique U du pneu.

7. Pneumatique de véhicule selon les caractéristiques de l'une des revendications précédentes,
dans lequel l'arête d'accrochage amont (8) dans le sens de rotation D, dans le cas d'une conduite vers l'avant, est réalisée dans le sens de rotation D avec deux portions d'arête d'accrochage (10, 12) s'étendant en ligne droite, convergeant en pointe l'une vers l'autre, une portion d'arête d'accrochage centrale (11) s'étendant en ligne droite étant réalisée entre les deux portions d'arête d'accrochage (10, 12) convergeant en pointe, l'extrémité d'étendue amont dans le sens de rotation D de l'une (10) des deux portions d'arête d'accrochage (10, 12) convergeant en pointe l'une vers l'autre se prolongeant en formant un point d'inflexion par l'une des extrémités d'étendue de la portion d'arête d'accrochage centrale (11) et l'extrémité d'étendue amont dans le sens de rotation D de l'autre (12) des deux portions d'arête d'accrochage (10, 12) convergeant en pointe l'une vers l'autre se prolongeant en formant un point d'inflexion par l'autre extrémité d'étendue de la portion d'arête d'accrochage centrale (11).

8. Pneumatique de véhicule selon les caractéristiques de la revendication 7, dans lequel la portion d'arête d'accrochage centrale (11) est orientée de manière étendue dans la direction axiale A du pneu.

9. Pneumatique de véhicule selon les caractéristiques de l'une des revendications 4 à 8, dans lequel l'arête d'accrochage (9) de la pointe de crampon (3) en aval dans le sens de rotation D est réalisée avec deux portions d'arête d'accrochage (13, 15) s'étendant en ligne droite, convergeant en pointe l'une vers l'autre dans le sens opposé au sens de rotation D et avec une portion d'arête d'accrochage centrale (14), de courbure concave, réalisée entre les deux portions d'arête d'accrochage (13, 15) convergeant en pointe l'une vers l'autre, l'extrémité d'étendue de l'une (13) des deux portions d'arête d'accrochage (13, 15) convergeant en pointe l'une vers l'autre, en aval dans le sens de rotation D, se prolongeant en formant un point d'inflexion par l'une des extrémités d'étendue de la portion d'arête d'accrochage centrale (14) et l'extrémité d'étendue de l'autre (15) des deux portions d'arête d'accrochage (13, 15) convergeant en pointe l'une vers l'autre, en aval dans le sens de rotation D, se prolongeant en formant un point d'inflexion par l'autre extrémité d'étendue de la portion d'arête d'accrochage centrale (14).

10. Pneumatique de véhicule selon les caractéristiques de l'une des revendications précédentes, dans lequel l'arête d'accrochage périphérique (7) forme dans la direction axiale A vers les deux côtés à chaque fois une arête d'accrochage latérale, l'arête d'accrochage latérale présentant à chaque fois une portion d'étendue (16, 17) dans laquelle l'arête d'accrochage (7) est orientée de manière à s'étendre en ligne droite dans la direction périphérique U du pneu.
